# EUROPEAN PATENT APPLICATION

(11) **EP 3 252 495 A1**
(43) Date of publication of application: **06.12.2017**
(21) Application number: 17171910.7
(22) Date of filing: 19.05.2017
(51) Int. Cl.: G01S 7/282, G01S 7/292, G01S 7/40, G01S 13/28

(54) **PULSE RADAR, METHOD OF CORRECTING TRANSMISSION PULSE IN PULSE RADAR, AND METHOD OF CORRECTING RECEPTION PULSE IN PULSE RADAR**

(30) Priority: 31.05.2016 JP 2016109245
(71) Applicant: Panasonic Intellectual Property Management Co., Ltd., Osaka-shi, Osaka 540-6207 (JP)
(72) Inventor: MORITA, Tadashi, Osaka-shi, Osaka 540-6207 (JP); TANAKA, Hiroshi, Osaka-shi, Osaka 540-6207 (JP)
(74) Representative: Grünecker Patent- und Rechtsanwälte PartG mbB

(57) **Abstract**

A pulse radar includes pulse generation circuitry that generates a transmission pulse signal, radio frequency transmission circuitry that transmits a radio frequency signal obtained by performing a frequency conversion on the transmission pulse signal, radio frequency reception circuitry that converts a reflected-wave signal to a reception pulse signal, the reflected-wave signal being a part of the radio frequency signal reflected back from an object to be measured and received via a reception antenna, signal processing circuitry that calculates a distance between the object and the pulse radar, detection circuitry that detects a main pulse, and correction filter coefficient calculation circuitry that calculates an amount of delay and a phase difference of the one or more error pulses with reference to the main pulse to update a parameter of the correction filter circuitry. The correction filter circuitry updates a filter characteristic using the updated parameter.

## Description

### BACKGROUND

### 1. Technical Field

The present disclosure relates to a pulse radar, a method of correcting a transmission pulse in a pulse radar, and a method of correcting a reception pulse in a pulse radar.

### 2. Description of the Related Art

In high-precision radar systems, a high-frequency device is used to process a signal in a microwave band or millimeter wave band. In high-frequency devices, for example, it is known that a frequency deviation increases with increasing frequency band, a temperature change has a large influence on characteristics, a large change in characteristics occurs with passing years, and a large difference in characteristics occurs among devices.

### SUMMARY

Japanese Unexamined Patent Application Publication No. 2001-016145 discloses a technique in which signals with two different frequencies in a transmission output wave are detected, and a linear frequency characteristic correction is performed based on detected values. In a pulse radar, in a case where a wide millimeter wave band is used, there is a possibility that it is necessary to correct a frequency characteristic in a more accurate manner. In a proposed technique to correct the frequency characteristic, a frequency characteristic value of the radio frequency (RF) unit is acquired over a wide frequency range while sweeping the frequency, and the frequency characteristic is corrected based on the acquired frequency characteristic value. However, this technique needs an FFT analysis circuit, which may result in an increase in circuit complexity.

One non-limiting and exemplary embodiment facilitates providing a pulse radar capable of reducing degradation in waveform of a decoded reception pulse signal caused by a radio frequency error thereby reducing degradation in sensing performance.

In one general aspect, the techniques disclosed here feature a pulse radar including pulse generation circuitry that generates a transmission pulse signal, radio frequency transmission circuitry that transmits a radio frequency signal obtained by performing a frequency conversion on the transmission pulse signal, radio frequency reception circuitry that converts a reflected-wave signal to a reception pulse signal, the reflected-wave signal being a part of the radio frequency signal reflected back from an object to be measured and received via a reception antenna, signal processing circuitry that calculates a distance between the object and the pulse radar, detection circuitry that detects a main pulse, and correction filter coefficient calculation circuitry that calculates an amount of delay and a phase difference of the one or more error pulses with reference to the main pulse to update a parameter of the correction filter circuitry. The correction filter circuitry updates a filter characteristic using the updated parameter.

According to the aspect of the present disclosure, the pulse radar is capable of reducing degradation in waveform of a decoded reception pulse signal due to a radio frequency error, and thus reducing degradation in sensing performance.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 illustrates an example of a configuration of a pulse radar according to a known technique;
Fig. 2A illustrates an example of a transmission pulse signal and a decoded reception pulse signal for a case where a radio frequency transmitter has a transfer characteristic with no frequency deviation;
Fig. 2B illustrates an example of a transmission pulse signal and a decoded reception pulse signal for a case where a radio frequency transmitter has a transfer characteristic with a frequency deviation;
Fig. 3 illustrates an example of a configuration of a pulse radar according to a first embodiment;
Fig. 4 illustrates an example of a change in a reception pulse signal and a change in a decoded reception pulse signal which may occur owing to a frequency deviation when a correction is not performed using a correction filter according to the first embodiment;
Fig. 5 is a flow chart illustrating a process of updating a correction filter;
Fig. 6 illustrates an example of coherent addition of correlation signals;
Fig. 7 illustrates an example of a decoded reception pulse signal that may occur when a correction using a correction filter according to the first embodiment is not performed;
Fig. 8 illustrates an example of a plurality of error pulses according to a second embodiment;
Fig. 9 illustrates an example of a pulse radar according to a third embodiment; and
Fig. 10 illustrates an example of a pulse radar according to a fifth embodiment.

### DETAILED DESCRIPTION

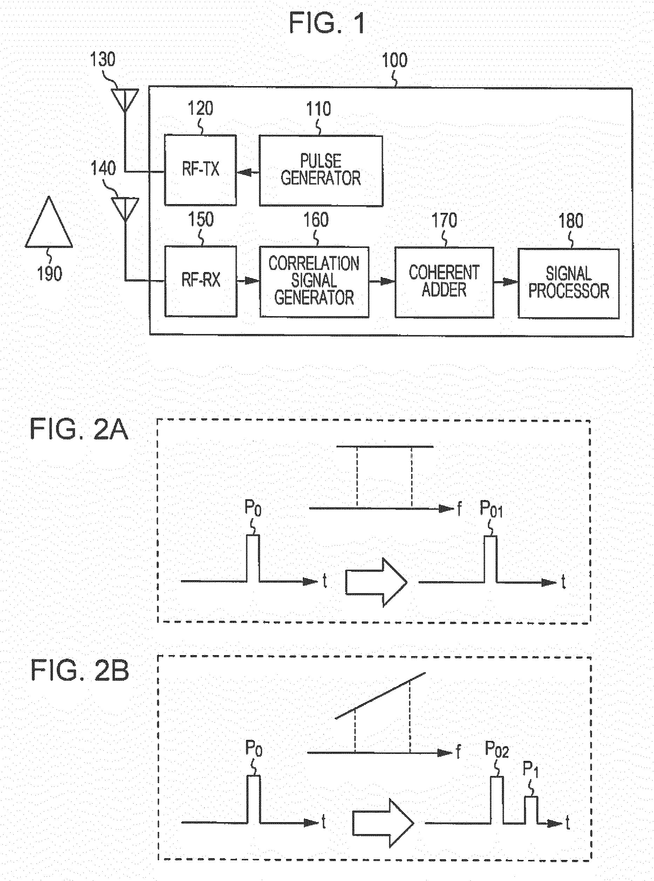

Fig. 1 illustrates a pulse radar 100 according to a known technique. The pulse radar 100 includes a transmission unit including a pulse generator 110, a radio frequency transmitter 120, and a transmission antenna 130. The pulse radar 100 also includes a reception unit including a reception antenna 140, a radio frequency receiver 150, a correlation signal generator 160, a coherent adder 170, and a signal processor 180.

The pulse generator 110 generates a transmission pulse signal. Subsequently, the pulse generator 110 codes the transmission pulse signal using a pulse code sequence such as a Golay code thereby generating a coded transmission pulse signal. The radio frequency transmitter 120 up-converts the coded transmission pulse signal thereby generating a high-frequency (radiofrequency) signal. The transmission antenna 130 transmits the radio frequency signal toward an object to be measured.

A part of the transmitted radio frequency signal is reflected by the object to be measured (corner reflector 190). The reception antenna 140 receives a reflected-wave signal reflected from the object to be measured. The radio frequency receiver 150 down-converts the received signal thereby generating a reception pulse signal. The correlation signal generator 160 calculates a correlation (a cross-correlation) between the reception pulse signal and the pulse code sequence used in coding, and generates a correlation signal.

The process from the generation of the transmission pulse signal to the generation of the correlation signal is performed repeatedly. The coherent adder 170 performs a coherent addition of correlation signals generated repeatedly in the above-described manner thereby generating a decoded reception pulse signal having an improved signal-to-noise ratio (SNR). The signal processor 180 performs a process such as a calculation of a distance to the object to be measured based on the decoded reception pulse signal.

Next, referring to Fig. 2A and Fig. 2B, the known technique shown in Fig. 1 is described in further detail below. Fig. 2A illustrates an example of a transmission pulse signal and a decoded reception pulse signal for a case where the radio frequency transmitter 120 has a transfer characteristic with no frequency deviation. Fig. 2B illustrates an example of a transmission pulse signal and a decoded reception pulse signal for a case where the radio frequency transmitter 120 has a transfer characteristic with a frequency deviation. In each figure, a horizontal axis represents a time axis, and a vertical axis represents a power level.

In Fig. 2A, the transfer characteristic of the radio frequency transmitter 120 has no frequency deviation, and thus when the transmission pulse signal in the form of a single pulse P₀ is transmitted, a single main pulse P₀₁ is obtained as the decoded reception pulse signal. On the other hand, in Fig. 2B, the transfer characteristic of the radio frequency transmitter 120 has a frequency deviation, and thus when the transmission pulse signal in the form of a single pulse P₀ is transmitted, the decoded reception pulse signal includes, in addition to the main pulse P₀₂, another signal component such as a pulse P₁.

In the radio frequency transmitter 120, as described above, in a case where there is a radio frequency error such as a frequency deviation, degradation in waveform occurs in the decoded reception pulse signal, which causes degradation in sensing performance of the pulse radar 100. Also in a case where the transfer characteristic of the radio frequency receiver 150 has a frequency deviation, degradation in sensing performance of the pulse radar 100 occurs.

In view of the above, the present disclosure provides techniques described in detail below with reference to embodiments in conjunction with drawings. Note that throughout all figures in this description, the same or similar constituent elements are denoted similar reference symbols or numerals.

### First Embodiment

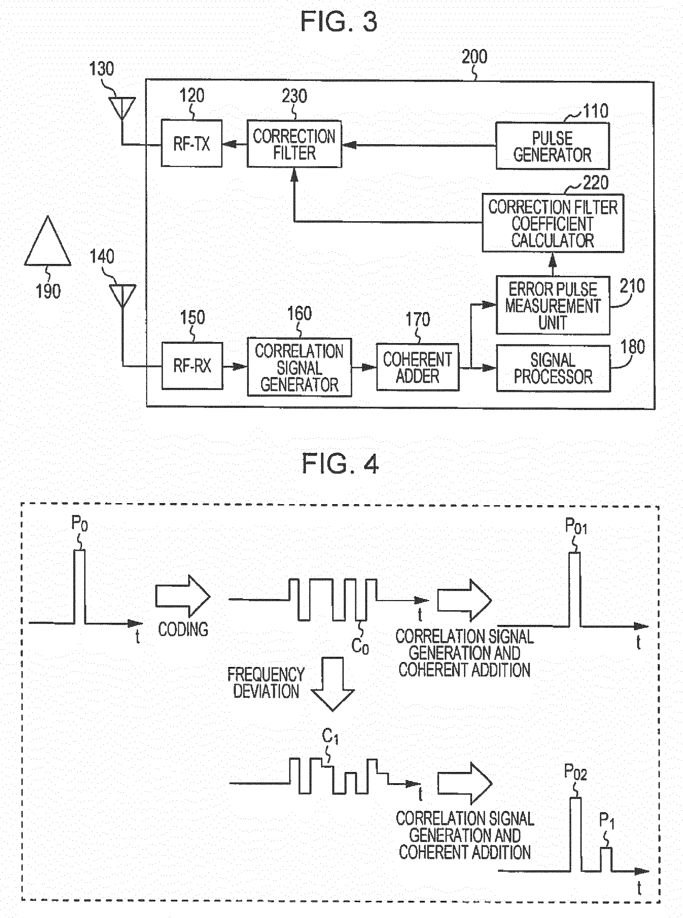

Fig. 3 illustrates an example of a configuration of a pulse radar 200 according to a first embodiment. The pulse radar 200 includes a transmission unit including a pulse generator 110, a correction filter 230, a radio frequency (RF) transmitter 120, and a transmission antenna 130. The pulse radar 200 also includes a reception unit including a reception antenna 140, a radio frequency (RF) receiver 150, a correlation signal generator 160, a coherent adder 170, a signal processor 180, an error pulse measurement unit 210, and a correction filter coefficient calculator 220. Note that in the configuration of the pulse radar 200, the correction filter 230, the error pulse measurement unit 210, and the correction filter coefficient calculator 220 are elements that the pulse radar 200 further includes in addition to the elements of the pulse radar 100 shown in Fig. 1. In Fig. 3, a corner reflector 190 is disposed separately from the pulse radar 200.

The correction filter 230 corrects an input coded transmission pulse signal. In an example, the correction filter 230 is a finite impulse response (FIR) filter including multistage taps configured such that a gain coefficient of each tap of the multistage taps can be updated. The number of stages of taps is determined depending on an amount of delay of a signal component to be corrected other than the main pulse output from the correlation signal generator 160. The correction filter 230 updates the gain coefficient of each tap according to the input gain coefficient update signal. The correction filter 230 is provided to correct, in the transmission unit, an error of the decoded reception pulse signal that occurs owing to a frequency deviation in at least one of the radio frequency transmitter 120 and the radio frequency receiver 150.

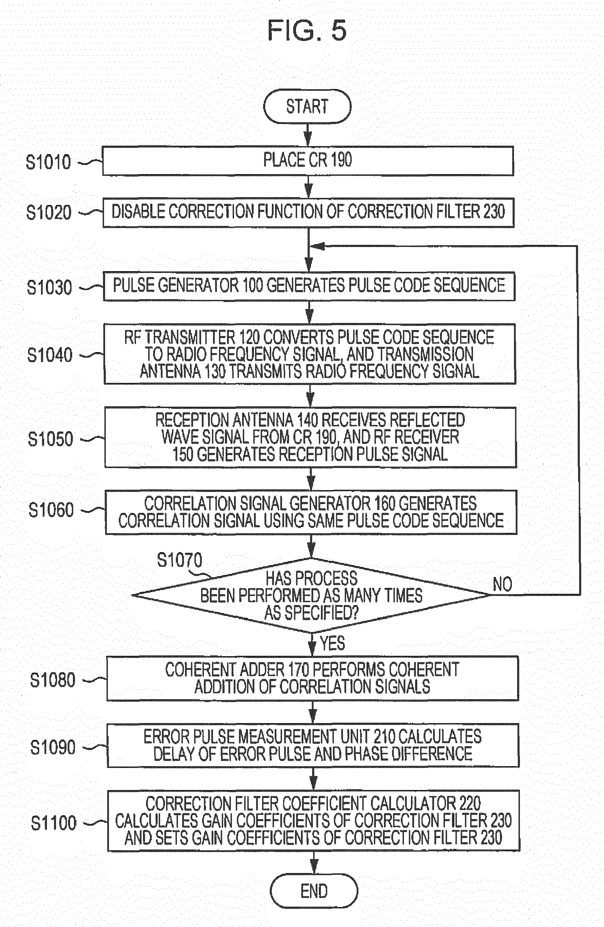

The error pulse measurement unit 210 measures an amount of delay and a phase difference of the signal component to be corrected with reference to the main pulse based on the decoded reception pulse signal generated by the coherent adder 170. Details of the measurement of the amount of delay and the phase difference will be described later with reference to Fig. 5.

The correction filter coefficient calculator 220 calculates gain coefficients used by the correction filter 230 based on information on the amount of delay and the phase difference measured by the error pulse measurement unit 210, and outputs a gain coefficient update signal according to the gain coefficients to the correction filter 230 thereby updating the correction filter 230. Details of the coefficients used by the correction filter 230 will be described later with reference to Fig. 5.

### Degradation in pulse waveform

Fig. 4 illustrates an example of a change in a reception pulse signal and a change in a decoded reception pulse signal which may occur owing to a frequency deviation when a correction is not performed using the correction filter 230 according to the first embodiment.

In Fig. 4, the transmission pulse generator 110 codes a transmission pulse signal including a single pulse P₀ using a pulse code sequence thereby generating a coded transmission pulse signal c₀. In a case where the radio frequency transmitter 120 and the radio frequency receiver 150 both have a transfer characteristic with no frequency deviation, the reception pulse signal has no error caused by a frequency deviation, and the decoded reception pulse signal generated by the coherent adder 170 includes a single main pulse P₀₁. That is, when there is no frequency deviation, no degradation in pulse waveform occurs.

On the other hand, in a case where the transfer characteristic has a frequency deviation at least in one of the radio frequency transmitter 120 and the radio frequency receiver 150, the reception pulse signal c₁ has an error, and thus the decoded reception pulse signal generated by the coherent adder 170 includes a signal component (error pulse) such as a pulse P₁ in addition to the main pulse P₀₂. Thus, when there is a frequency deviation, degradation in pulse waveform occurs.

### Procedure of updating correction filter 230

Fig. 5 is a flow chart illustrating an example of a process of updating the correction filter 230.

First, in step S1010, the corner reflector (CR) 190 is placed. In the first embodiment, for example, the CR 190 is placed, in front of the pulse radar 200, at a known distance from the pulse radar 200. In this case, updating of the correction filter 230 is performed, for example, when the pulse radar 200 is shipped from a factory or when the electric power of the pulse radar 200 is turned on. In the updating of the correction filter 230, in a case where there is another reflective object in front of the pulse radar 200, or in a case where there is a wall capable of reflecting a radio wave in front of the pulse radar 200, it is difficult to accurately measure a reflected wave from the CR 190. To avoid such a problem, for example, the CR 190 is placed, in front of the pulse radar 200, 5 meters apart therefrom and no any other reflective object is placed near the CR 190. This makes is possible to improve the measurement accuracy of the pulse radar 200 in the process of updating the correction filter 230.

Next, in step S1020, the correction function of the correction filter 230 is disabled. That is, the correction filter 230 directly outputs the input signal to the radio frequency transmitter 120 without performing the correction process on the signal input to the correction filter 230. For example, in a case where the correction filter 230 is an FIR filter, the tap coefficient is set to 1 for taps having no delay, and the tap coefficient is set to 0 for the other taps.

Next, in step S1030, the pulse generator 110 generates a pulse code sequence. There is no particular restriction on the generated pulse code sequence. For example, the pulse code sequence used by the pulse radar 200 to detect an object to be measured may be employed.

Next, in step S1040, the radio frequency transmitter 120 converts the pulse code sequence to a radio frequency signal and transmits the resultant radio frequency signal from the transmission antenna 130. Next, in step S1050, the reception antenna 140 receives a reflected-wave signal, which is a signal reflected back from the CR 190, and the radio frequency receiver 150 generates a reception pulse signal from the reflected-wave signal.

Next, in step S1060, the correlation signal generator 160 calculates a correlation between the pulse code sequence used in the coding and the reception pulse signal, and generate a correlation signal. Next, in step S1070, it is determined whether the process from step S1030 to step S1060 has been repeated as many times as specified. There is no particular restriction on the specified number of times that the process is to be repeated. However, the greater the specified number, the higher the SNR of the output signal output in step S1080 from the coherent adder 170. In a case where it is determined that the process from step S1030 to step S1060 has not yet been repeated as many times as specified (No in S1070), the processing flow returns to step S1030.

In a case where it is determined in step S1070 that the process from step S1030 to step S1060 has been repeated as many times as specified (Yes in S1070), the processing flow proceeds to step S1080, in which the coherent adder 170 performs the coherent addition of the correlation signals and generates a decoded reception pulse signal.

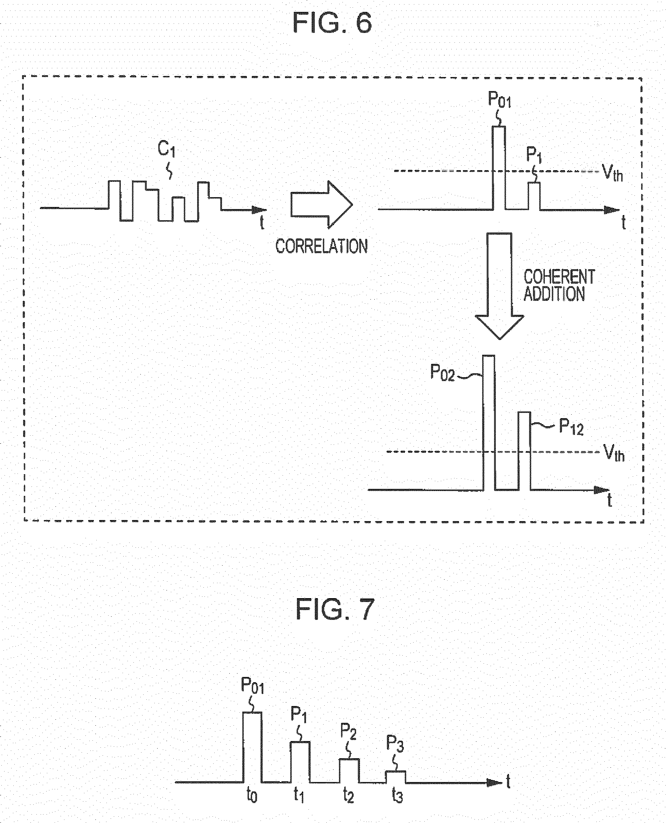

The coherent addition is described below with reference to Fig. 6. Fig. 6 is a diagram illustrating an example of coherent addition of correlation signals. In Fig. 6, a reception pulse signal c₁ has a deformation in waveform due to an influence of a frequency deviation of high frequency units. The correlation signal generator 160 calculates a correlation between the reception pulse signal c₁ and the pulse code sequence used in coding, and generates a correlation signal.

In the generated correlation signal, in addition to the main pulse P₀₁, an error pulse P₁ occurs owing to an influence of the frequency deviation of the radio frequency units. For example, to remove an influence of thermal noise occurring in the radio frequency receiver 150, if the threshold value Vₜₕ is set to be higher than the error pulse P₁, then the error pulse P₁ to be observed is hidden behind the noise, which makes it difficult to observe the error pulse P₁.

By performing the coherent addition, the signal component is amplified, while noise components are suppressed because cancellation occurs owing to phase differences among noise components. As a result, in the decoded reception pulse signal, the power levels of the main pulse P₀₂ and the error pulse P₁₂ to be observed become higher than the threshold value Vₜₕ for removing an influence of thermal noise, and thus it is possible to observe the main pulse P₀₂ and the error pulse P₁₂. As described above, by performing the coherent addition, it is possible to improve the SNR of the correlation signal output by the correlation signal generator 160.

Referring again to Fig. 5, in step S1090, based on the decoded reception pulse signal output by the coherent adder 170, the error pulse measurement unit 210 measures the amount of delay and the phase difference of the error pulse with reference to the main pulse. Fig. 7 illustrates an example of a decoded reception pulse signal that may occur when the correction using the correction filter 230 according to the first embodiment is not performed. In Fig. 7, a plurality of error pulses associated with the decoded reception pulse signal occur.

The error pulse measurement unit 210 detects an error pulse with a highest power level (a first error pulse P₁) from a plurality of error pulses. Subsequently, the error pulse measurement unit 210 measures the amount of delay and the phase difference of the first error pulse P₁ with reference to the main pulse (the first pulse P₀₁).

More specifically, first, the error pulse measurement unit 210 identifies the first pulse P₀₁. The timing of outputting the first pulse P₀₁ depends on the location of the CR 190 placed in front of the pulse radar 200. For example, in a case where the CR 190 is placed, in front of the pulse radar 200, 5 meters apart from the pulse radar 200, because the radio frequency signal propagates through the space at a speed equal to the speed of light, the pulse radar 200 observes a first pulse P_{0'} as the main pulse at a time corresponding to the distance of 5 meters x 2 after the radio frequency signal is transmitted.

Subsequently, the error pulse measurement unit 210 identifies the first error pulse P₁. More specifically, the error pulse measurement unit 210 selects, as the first error pulse, a maximum pulse (P₁) of signal components (P₁, P₂, P₃) existing after the first pulse P₀₁ excluding the first pulse P₀₁.

Subsequently, the error pulse measurement unit 210 calculates an amount of delay d and a phase difference ph of the one or more error pulses with reference to the first pulse P₀₁. More specifically, a measured value of the first pulse P₀₁ is expressed as (t₀, v₀), and a measured value of the first error pulse P₁ is expressed as (t₁, v₁), where tₙ denotes a time at which the pulse is measured, vₙ = (iₙ, qₙ) denotes an IQ component of the pulse at the time tₙ. In this case, the amount of delay d is calculated as d = t₁ - t₀, and the phase difference ph is calculated as ph = v₁/v₀.

In step S1100, the correction filter coefficient calculator 220 calculates gain coefficients of the correction filter 230 and sets the gain coefficients of the correction filter 230. More specifically, based on the amount of delay d measured by the error pulse measurement unit 210, the correction filter coefficient calculator 220 calculates the tap sequence k for which the gain coefficient is to be set as k = d/s where s denotes a sampling rate used by the correction filter 230. Subsequently, the correction filter coefficient calculator 220 sets the gain of the tap sequence k such that the phase is different by 180° from ph, that is, the phase is set to -ph.

As described above, the correlation signal generator 160, the coherent adder 170, and the error pulse measurement unit 210 function as a detector that detects, from the reception pulse signal, a main pulse and at least one error pulse existing after the main pulse,

After the process from step S1010 to step S1100 is completed, and before the radio transmission is performed, the correction filter 230 corrects the coded transmission pulse signal in terms of the frequency deviation that may occur in the radio frequency transmitter 120 and the radio frequency receiver 150 such that a first error pulse is cancelled out in a decoded reception pulse signal generated by the coherent adder 170.

As described above, in the pulse radar system in which a high-frequency device such as a millimeter-wave device or a microwave device is used, the technique according to the present embodiment makes it possible to reduce degradation in sensing performance of the pulse radar caused by a frequency deviation of a characteristic of the high-frequency device. Thus, even in a case where the high-frequency device has a time-dependent or temperature-dependent change in characteristic or even in a case where there is a difference in characteristics among devices, it is possible to realize a high-accuracy radar system in a simple configuration.

### Second Embodiment

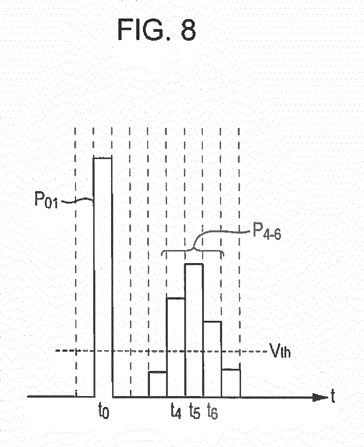

Fig. 8 is a diagram illustrating an example of error pulses according to a second embodiment. In the first embodiment described above, it is assumed that an error pulse occurs in a range of location corresponding to about one sampling period. In the second embodiment, in contrast, it is assumed that error pulses occur in a range of location corresponding to several sampling periods. In the following description, it is assumed that error pulses with high power levels occur in a range of location corresponding to several sampling periods.

In Fig. 8, error pulses (error pulses P₄ to P₆) having high power levels associated with the main pulse (the first pulse P₀₁) at time to occur across three sampling periods from t₄ to t₆. In the example shown in Fig. 8, three error pulses P₄ to P₆ are error pulses to be corrected.

More specifically, the error pulse measurement unit 210 first identifies an error pulse P₅ with a highest power level of all error pulses. Subsequently, the error pulse measurement unit 210 identifies error pulses P₄ to P₆ with power levels higher than a threshold value Vₜₕ existing near the error pulse P₅, and determines a range of location of error pulses t₄ to t₆ expressed in units of sampling periods in which the error pulses P₄ to P₆ to be corrected are located. In this process, the error pulse measurement unit 210 determines the threshold value Vₜₕ such that, for example, in a case where, as in the first embodiment, the ratio between the power level of the first pulse (the main pulse, P₀₁ in the example shown in Fig. 8) and the power level of the first error pulse (P₅ in the example shown in Fig. 8) is 1 : p, V,r, is determined such that the ration between the power of the first error pulse (P₅ in the example shown in Fig. 8) and Vₜₕ is 1 : p.

Subsequently, the error pulse measurement unit 210 measures, as in the first embodiment, a measured value (t₀, v₀) of the first pulse P₀₁ and measured values (t₄, v₄) to (t₆, v₆) of the error pulses P₄ to P₆ in the range from t₄ to t₆ in sampling periods. Subsequently, the error pulse measurement unit 210 calculates amounts of delay d₄ to d₆ of the error pulses P₄ to P₆ as dₖ = tₖ - t₀ (k = 4, 5, 6), and calculates phase differences ph₄ to ph₆ of the error pulses P₄ to P₆ as phₖ = vₖ/v₀ (k = 4, 5, 6).

Next, the correction filter coefficient calculator 220 calculates gain coefficients of the correction filter 230 and sets the gain coefficients of the correction filter 230. As in the first embodiment, the correction filter coefficient calculator 220 calculates the tap sequence k₄ to k₆ for which the gain coefficient is to be set as kₘ = dₘ/s (m = 4, 5, 6) where s denotes a sampling rate, and the correction filter coefficient calculator 220 sets the respective gain coefficients of the tap sequence k₄ to k₆ as -ph₄ to -ph₆. By performing the setting in the above-described manner, it becomes possible for the correction filter 230 to cancel out the error pulses P₄ to P₆ corresponding to the three taps.

Note that in the second embodiment, the threshold value may be set as Vₜₕ = 0 such that a particular number of error pulses corresponding to all taps of the correction filter 230 are cancelled out. In this case, it is allowed to omit the process of identifying an error pulse having a highest power level.

### Third Embodiment

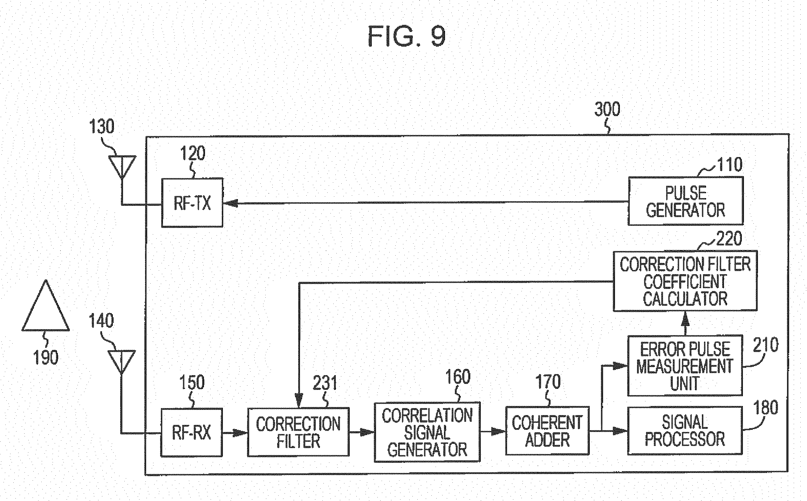

Fig. 9 is a diagram illustrating an example of a configuration of a pulse radar 300 according to a third embodiment. The pulse radar 300 includes a transmission unit including a pulse generator 110, a radio frequency transmitter 120, and a transmission antenna 130. The pulse radar 300 further includes a reception unit including a reception antenna 140, a radio frequency receiver 150, a correction filter 231, a correlation signal generator 160, a coherent adder 170, a signal processor 180, an error pulse measurement unit 210, and a correction filter coefficient calculator 220.

The pulse radar 300 according to the third embodiment is different from the pulse radar 200 according to the first embodiment in terms of an input signal given to the correction filter and a unit to which an output signal from the correction filter is input. The correction filter 230 of the pulse radar 200 receives input signals from the pulse generator 110 and the correction filter coefficient calculator 220, and outputs a signal to the radio frequency transmitter 120. In contrast, the correction filter 231 of the pulse radar 300 receives input signals from the radio frequency receiver 150 and the correction filter coefficient calculator 220, and outputs a signal to the correlation signal generator 160.

The correction filter 231 has a similar function to that of the correction filter 230. In the first embodiment, the correction filter 230 corrects the coded transmission pulse signal before the radio transmission is performed thereby handling the waveform change due to the frequency deviation. In the third embodiment, in contrast, the correction filter 231 corrects the reception pulse signal after it is received via the radio frequency receiver. Although the location of the correction filter is different, the process according to the third embodiment is similar to that according to the first embodiment. Also in the third embodiment, as in the second embodiment, a plurality of error pulses corresponding to a plurality of taps may be cancelled out.

### Fourth Embodiment

In the first embodiment, the correction filter 230 receives input signals from the pulse generator 110 and the correction filter coefficient calculator 220, and outputs a signal to the radio frequency transmitter 120. In the second embodiment, the correction filter 231 receives input signals from the radio frequency receiver 150 and the correction filter coefficient calculator 220, and outputs a signal to the correlation signal generator 160. In the fourth embodiment, in contrast, for example, at least one of the correction filter 230 according to the first embodiment and the correction filter 231 according to the second embodiment is provided.

In this case, for error pulses having an amount of delay d and a phase difference ph, it is determined for which tap sequence k = d/s (where s is a sampling rate) the gain coefficient is to be set, and a plurality of gain coefficients of the tap sequence k of the correction filter are set such that the sum thereof becomes equal to -ph. Also in the fourth embodiment, as in the second embodiment, a plurality of error pulses corresponding to a plurality of taps may be cancelled out.

### Fifth Embodiment

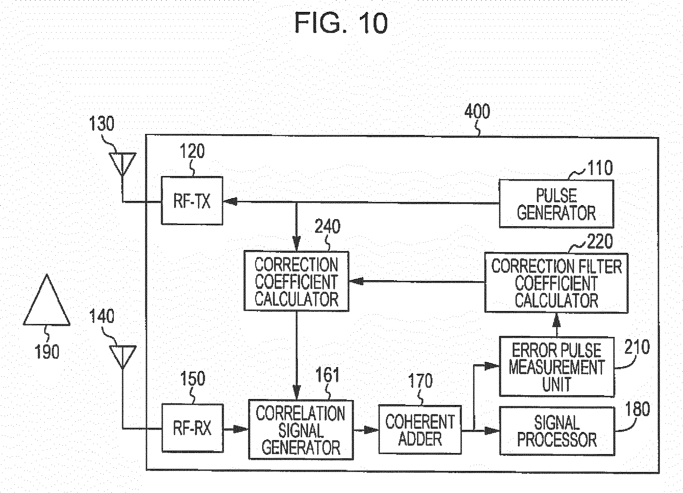

Fig. 10 illustrates an example of a configuration of a pulse radar 400 according to a fifth embodiment. The pulse radar 400 includes a transmission unit including a pulse generator 110, a radio frequency transmitter 120, and a transmission antenna 130. The pulse radar 400 further includes a reception unit including a reception antenna 140, a radio frequency receiver 150, a correlation signal generator 161, a coherent adder 170, a signal processor 180, an error pulse measurement unit 210, a correction filter coefficient calculator 220, and a correction coefficient calculator 240. The pulse radar 400 according to the fifth embodiment is different from the pulse radar 300 according to the third embodiment in that the pulse radar 400 includes the correlation signal generator 161 and the correction coefficient calculator 240 instead of the correlation signal generator 160 and the correction filter 231.

The correlation signal generator 161 may be configured to realize, using a FIR filter, a function similar to that of the correlation signal generator 160, and there is no restriction on details of the configuration as long as the function is achieved. In the fifth embodiment, a single FIR filter in the correlation signal generator 161 performs both the process performed by the FIR filter of the correction filter 231 and the process performed by the correlation signal generator 160 according to the third embodiment.

The correction coefficient calculator (transmission pulse signal corrector) 240 performs a calculation such that, for the error pulse having the amount of delay d and the phase difference ph calculated by the correction filter coefficient calculator 220 (delay and phase difference calculator), a sequence obtained by applying the amount of delay d and the phase difference ph to the pulse code sequence used in the coding is subtracted from the original pulse code sequence thereby determining a corrected pulse code sequence. The correlation signal generator 161 calculates a correlation between the input pulse signal and, not the pulse code sequence used in the coding, but the corrected pulse code sequence calculated by the correction coefficient calculator 240 thereby generating a correlation signal.

In Fig. 10, the correction filter unit including the FIR filter disposed separately from the correlation signal generator 160 may be omitted, which makes it possible to simplify the structure.

### Sixth Embodiment

In the first to fifth embodiments described above, updating of at least one correction filter or calculating of the correlation coefficient is each performed once for an error pulse associated with one main pulse. Alternatively, in a sixth embodiment, updating of at least one correction filter or calculating of the correlation coefficient is each performed a plurality of times for an error pulse associated with one main pulse, for example, until the gain coefficient or the correlation coefficient converges, which makes it possible to improve the accuracy of the correction of the error pulse.

### Other Embodiments

In the flow chart shown in Fig. 5, after the generation of the correlation signal is performed as many times as specified, the coherent adder 170 performs the coherent addition of the correlation signals. Note that the process shown in this flow chart is merely an example. Alternatively, the generation of the correlation signal and the coherent addition may be performed sequentially as many times as specified. The order of performing the steps described in the flow chart may be changed, or one or two steps may be omitted.

### Summary of Embodiments

According to the first aspect, the pulse radar includes the pulse generator that generates a transmission pulse signal, the radio frequency reception processor that transmits, from the transmission antenna, the radio frequency signal obtained as a result of a frequency conversion performed on the transmission pulse signal, the radio frequency reception processor that converts a reflected-wave signal to a reception pulse signal, the reflected-wave signal being a part of the radio frequency signal reflected back from an object to be measured and received via the reception antenna, the signal processor that calculates a distance to the object to be measured by using the reception pulse signal, the detector that detects, using the reception pulse signal, a main pulse corresponding to the object to be measured and one or more error pulses existing after the main pulse, the correction filter including the first filter that is disposed between the pulse generator and the radio frequency transmission processor and corrects the transmission pulse signal, or the second filter that is disposed between the radio frequency reception processor and the detector and corrects the reception pulse signal, and the correction filter coefficient calculator that calculates an amount of delay and a phase difference of the one or more error pulses with reference to the main pulse to output an updated parameter of the correction filter based on the amount of delay and the phase difference, wherein the correction filter updates the filter characteristic using the updated parameter.

In the pulse radar according to the second aspect based on the first aspect, the correction filter may include the finite impulse response (FIR) filter including the multistage taps, and the correction filter may set, based on the updated parameter, the gain coefficient of a tap corresponding to the amount of delay to a value having a phase difference rotated by 180°.

In the pulse radar according to the third aspect based on the first or second aspect, the radio frequency reception processor may receive the main pulse such that the timing of receiving the main pulse corresponds to the distance between the object to be measured and the pulse radar.

In the pulse radar according to the fourth aspect based on the third aspect, the detector may detect a pulse, of the one or more error pulses, having a highest power level.

In the pulse radar according to the fifth aspect based on the third aspect, the detector may detect, from one or more error pulses existing within a predetermined range of delay with reference to an error pulse having a highest power level, an error pulse having a power level higher than a predetermined threshold value.

In the sixth aspect, the pulse radar includes the pulse generator that generates a transmission pulse signal, the radio frequency transmission processor that transmits, from the transmission antenna, a radio frequency signal obtained as a result of the frequency conversion performed on the transmission pulse signal, the radio frequency reception processor that converts a reflected-wave signal to a reception pulse signal, the reflected-wave signal being a part of the radio frequency signal reflected back from an object to be measured and received via the reception antenna, the detector that detects, based on the reception pulse signal subjected to the correction process, a main pulse corresponding to the object to be measured and one or more error pulses existing after the main pulse, the delay-and-phase-difference calculator that calculates an amount of delay and a phase difference of the one or more error pulses with reference to the main pulse, the transmission pulse signal corrector that corrects the transmission pulse signal based on the amount of delay and the phase difference, the correlation signal generator that calculates a correlation between the corrected transmission pulse signal and the reception pulse signal and outputs a correlation signal indicating the calculated correlation, the coherent adder that performs the coherent addition of the correlation signal thereby generating a reception pulse signal subjected to the correction process, and the signal processor that calculates a distance to the object to be measured by using the reception pulse signal subjected to the correction process.

In the seventh aspect, the method of correcting, in a pulse radar, a transmission pulse, the method including generating a transmission pulse signal, correcting the transmission pulse signal using a correction filter, transmitting, from a transmission antenna, a radio frequency signal obtained as a result of a frequency conversion performed on the corrected transmission pulse signal, converting a reflected-wave signal to a reception pulse signal, the reflected-wave signal being a part of the radio frequency signal reflected back from an object to be measured and received via a reception antenna, calculating a distance to the object to be measured by using the reception pulse signal, detecting, using the reception pulse signal, a main pulse corresponding to the object to be measured and one or more error pulses existing after the main pulse, calculating an amount of delay and a phase difference of the one or more error pulses with reference to the main pulse, outputting an updated parameter of the correction filter based on the amount of delay and the phase difference, and updating a filter characteristic of the correction filter using the updated parameter.

In the eighth aspect, the method of correcting, in a pulse radar, a reception pulse, the method including generating a transmission pulse signal, transmitting, from a transmission antenna, a radio frequency signal obtained as a result of a frequency conversion performed on the transmission pulse signal, converting a reflected-wave signal to a reception pulse signal, the reflected-wave signal being a part of the radio frequency signal reflected back from an object to be measured and received via a reception antenna, correcting the reception pulse signal using a correction filter, calculating a distance to the object to be measured by using the corrected reception pulse signal, detecting, using the reception pulse signal, a main pulse corresponding to the object to be measured and one or more error pulses existing after the main pulse, calculating an amount of delay and a phase difference of the one or more error pulses with reference to the main pulse, outputting an updated parameter of the correction filter based on the amount of delay and the phase difference, and updating a filter characteristic of the correction filter using the updated parameter.

In the ninth aspect, the method of correcting, in a pulse radar, a reception pulse, the method including generating a transmission pulse signal, transmitting, from a transmission antenna, a radio frequency signal obtained as a result of a frequency conversion performed on the transmission pulse signal, converting a reflected-wave signal to a reception pulse signal, the reflected-wave signal being a part of the radio frequency signal reflected back from an object to be measured and received via a reception antenna, detecting, based on the reception pulse signal subjected to a correction process, a main pulse corresponding to the object to be measured and one or more error pulses existing after the main pulse, calculating an amount of delay and a phase difference of the one or more error pulses with reference to the main pulse, correcting the transmission pulse signal based on the amount of delay and the phase difference, calculating a correlation between the corrected transmission pulse signal and the reception pulse signal and outputting a correlation signal indicating the calculated correlation, generating the reception pulse signal subjected to the correction process by performing a coherent addition of the correlation signal, and calculating a distance to the object to be measured by using the corrected reception pulse signal subjected to the correction process.

The present disclosure can be realized by software, hardware, or software in cooperation with hardware.

Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The pulse radar according to the present disclosure may be used to reduce degradation in sensing performance caused by a frequency deviation.

## Claims

1. A pulse radar comprising:
pulse generation circuitry that generates a transmission pulse signal;
radio frequency transmission circuitry that transmits, from a transmission antenna, a radio frequency signal obtained by performing a frequency conversion on the transmission pulse signal;
radio frequency reception circuitry that converts a reflected-wave signal to a reception pulse signal, the reflected-wave signal being a part of the radio frequency signal reflected back from an object to be measured and received via a reception antenna;
signal processing circuitry that calculates a distance between the object to be measured and the pulse radar by using the reception pulse signal;
detection circuitry that detects, using the reception pulse signal, a main pulse corresponding to the object to be measured and one or more error pulses existing after the main pulse;
correction filter circuitry including a first filter that is disposed between the pulse generation circuitry and the radio frequency transmission circuitry and corrects the transmission pulse signal, or a second filter that is disposed between the radio frequency reception circuitry and the detection circuitry and corrects the reception pulse signal; and
correction filter coefficient calculation circuitry that calculates an amount of delay and a phase difference of the one or more error pulses with reference to the main pulse to update a parameter of the correction filter circuitry based on the amount of delay and the phase difference,
wherein the correction filter circuitry updates a filter characteristic using the updated parameter.

2. The pulse radar according to claim 1, wherein
the correction filter circuitry includes a finite impulse response (FIR) filter including a multistage taps, and
the correction filter circuitry sets, based on the updated parameter, a gain coefficient of one or more taps corresponding to the amount of delay to a value having a phase difference rotated by 180°.

3. The pulse radar according to claim 1, wherein the radio frequency reception circuitry receives the main pulse at a timing corresponding to the distance between the object to be measured and the pulse radar.

4. The pulse radar according to claim 3, wherein the detection circuitry detects a pulse, of the one or more error pulses, having a highest power level.

5. The pulse radar according to claim 4, wherein the detection circuitry detects, from the one or more error pulses existing within a determined range of delay with reference to the error pulse having the highest power level, an error pulse having a power level higher than a determined threshold value.

6. A pulse radar comprising:
pulse generation circuitry that generates a transmission pulse signal;
radio frequency transmission circuitry that transmits, from a transmission antenna, a radio frequency signal obtained by performing a frequency conversion on the transmission pulse signal;
radio frequency reception circuitry that converts a reflected-wave signal to a reception pulse signal, the reflected-wave signal being a part of the radio frequency signal reflected back from an object to be measured and received via a reception antenna;
detection circuitry that detects, based on a corrected reception pulse signal, a main pulse corresponding to the object to be measured and one or more error pulses existing after the main pulse;
delay-and-phase-difference calculation circuitry that calculates an amount of delay and a phase difference of the one or more error pulses with reference to the main pulse;
transmission pulse signal correction circuitry that corrects the transmission pulse signal based on the amount of delay and the phase difference;
correlation signal generation circuitry that calculates a correlation between the corrected transmission pulse signal and the reception pulse signal and outputs, at different timings, a plurality of correlation signals indicating the calculated correlation, the plurality of correlation signals including at least a first correlation signal and a second correlation signal
coherent adder circuitry that adds the first correlation signal to the second correlation signal by performing a correction addition process to generate the corrected reception pulse signal; and
signal processing circuitry that calculates a distance between the object to be measured and the pulse radar by using the corrected reception pulse signal.

7. A method of correcting a transmission pulse of a pulse radar, comprising:
generating a transmission pulse signal;
correcting the transmission pulse signal using correction filter circuitry;
transmitting, from a transmission antenna, a radio frequency signal obtained by performing a frequency conversion on the corrected transmission pulse signal;
converting a reflected-wave signal to a reception pulse signal, the reflected-wave signal being a part of the radio frequency signal reflected back from an object to be measured and received via a reception antenna;
calculating a distance between the object to be measured and the pulse radar by using the reception pulse signal;
detecting, using the reception pulse signal, a main pulse corresponding to the object to be measured and one or more error pulses existing after the main pulse;
calculating an amount of delay and a phase difference of the one or more error pulses with reference to the main pulse;
updating a parameter of the correction filter circuitry based on the amount of delay and the phase difference; and
updating a filter characteristic of the correction filter circuitry using the updated parameter.

8. A method of correcting a reception pulse of a pulse radar, comprising:
generating a transmission pulse signal;
transmitting, from a transmission antenna, a radio frequency signal obtained by performing a frequency conversion performed on the transmission pulse signal;
converting a reflected-wave signal to a reception pulse signal, the reflected-wave signal being a part of the radio frequency signal reflected back from an object to be measured and received via a reception antenna;
correcting the reception pulse signal using correction filter circuitry;
calculating a distance between the object to be measured and the pulse radar by using the corrected reception pulse signal;
detecting, using the reception pulse signal, a main pulse corresponding to the object to be measured and one or more error pulses existing after the main pulse;
calculating an amount of delay and a phase difference of the one or more error pulses with reference to the main pulse;
updating a parameter of the correction filter circuitry based on the amount of delay and the phase difference; and
updating a filter characteristic of the correction filter circuitry using the updated parameter.

9. A method of correcting a reception pulse of a pulse radar, comprising:
generating a transmission pulse signal;
transmitting, from a transmission antenna, a radio frequency signal obtained by performing a frequency conversion performed on the transmission pulse signal;
converting a reflected-wave signal to a reception pulse signal, the reflected-wave signal being a part of the radio frequency signal reflected back from an object to be measured and received via a reception antenna;
detecting, based on a corrected reception pulse signal, a main pulse corresponding to the object to be measured and one or more error pulses existing after the main pulse;
calculating an amount of delay and a phase difference of the one or more error pulses with reference to the main pulse,
correcting the transmission pulse signal based on the amount of delay and the phase difference;
calculating a correlation between the corrected transmission pulse signal and the reception pulse signal and outputting, at different timings, a plurality of correlation signals indicating the calculated correlation, the plurality of correlation signals including at least a first correlation signal and a second correlation signal
adding the first correlation signal to the second correlation signal by performing a coherent addition to generate the corrected reception pulse signal; and
calculating a distance between the object to be measured and the pulse radar by using the corrected reception pulse signal.
